# NEW EUROPEAN PATENT SPECIFICATION

(11) **EP 1 750 820 B2**
(45) Date of publication and mention of the opposition decision: **31.12.2014**
(45) Mention of the grant of the patent: 06.02.2008
(21) Application number: 04730378.9
(22) Date of filing: 29.04.2004
(51) Int. Cl.: A63G 31/16

(54) **COMPUTER SIMULATION CONTROL SYSTEM**
COMPUTERSIMULATIONSSTEUERSYSTEM
SYSTEME DE CONTROLE DE SIMULATION INFORMATIQUE

(43) Date of publication of application: 14.02.2007
(73) Proprietor: Smit, Fernando, 7005 BS Doetinchem (NL)
(72) Inventor: Smit, Fernando, 7005 BS Doetinchem (NL)
(74) Representative: Jansen, Cornelis Marinus
(86) International application number: PCT/NL2004/000288
(87) International publication number: WO 2005/105246

(56) References cited:
- DE-A1- 4 434 660
- DE-A1- 10 009 615
- DE-C1- 10 131 399
- FR-A1- 2 787 308
- GB-A- 2 329 829
- JP-A- H11 179 051
- US-A- 5 299 810
- US-A1- 2002 032 553

## Description

The present invention relates to a computer simulation control system, comprising:
- at least one control module for controlling a computer simulator program;
- a seat comprising a seat part and a back support;
- at least one mechanism for coupling the seat and the at least one control module to each other in such a way, that a user can be seated on the seat part of the seat for handling the at least one control module there-from;

Such a computer simulation control system is known from the racing car industry. After assembly, said at least one control module and the seat are coupled to each other by said coupling mechanism. The control module comprises, for example, a steering wheel which is positioned in front of the seat -in a suitable driving position- for a race simulation. The computer may be, for instance, an external home computer, personal computer, game computer and the like. Control modules for controlling computer simulator programs are known and marketed by, for instance, Logitech^{tm}.

During use, a user takes place in the seat for handling said at least one control module. Furthermore, during use, the control module is usually connected to a computer which runs said simulator program, for controlling that program. The assembled control system provides a high reality simulation environment and particularly a relatively real feel of the simulation environment during the control of the simulator program.

A disadvantage of the known computer simulation control system is, that it requires relatively much space. Therefore, the transportation and/or storage of the known system is relatively complex and expensive. Particularly, only a relatively small number of control systems can be packed in one loading volume, for instance in one shipping container or in one trailer compartment, leading to high transportation costs per control system. Besides, the handling of a relatively large control system during transport thereof is relatively difficult, and may lead to collisions which might damage sensitive parts of the system. Furthermore, it may be desired to move the control system from one place to another by an end-user, so that the system can be used in different locations. This is also relatively difficult to accomplish in view of said handling problems of the system.

DE 100 09 615 discloses a vehicle drive simulator movement system e.g. for automobile, including a drive system for simulating lateral transient acceleration forces by computer via control unit.

JP11-179051 discloses a body feeling chair with a video game operation function for a household, including a seat board and a back board shared to the average figure of a human. The back board and seat board are pivotally connected.

The present invention aims to improve the computer simulation control system. Particularly, the invention aims to provide a computer simulation control system, wherein the system can be transported, stored and/or handled relatively safe and easy.

To this aim, the computer simulation system of the present invention is characterized by the features of claim 1.

According to the present invention, the back support of the seat is movable between a first position, in which first position the back support extends at an operating angle upwardly from said seat part for supporting at least part of the back of a user, and a second position, in which second position the back support does not extend at said operating angle upwardly from the seat part, wherein said-back support extends substantially opposite the seat part when the back support is in the second position, wherein said seat part comprises a seat frame, wherein said back support comprises a back support frame, wherein the seat frame and back support frame comprise frame connectors for movably connecting these frames to each other, wherein the seat frame comprises a bottom frame part and a rear frame part, the rear frame part extending at said operating angle upwardly from the bottom frame part, wherein the back support frame is movably connected to said rear frame part of the seat frame.

During normal use of the control system, said back support is in the first position, for creating a relatively real simulator control environment. When the control system is not in use, the back support can simply be moved to the second position, for instance a substantially horizontal position, particularly for reducing the overall dimensions of the control system, and more particularly for reducing the height of the system. When the back support is in said second position, the control system can be transported, stored and/or handled relatively easy, for example in a relatively small area. This further leads to a substantial reduction of transporting and/or storing costs. Until the present invention, no one has come up with this simple inventive idea that the seat of the computer simulation control system can simply be arranged as described above, leading to said advantages.

In one embodiment of the invention, the back support and the seat part of the seat are detachably connected, for instance with a hinge system, to each other when the back support is in the first position, for moving the back support to the second position. The back support can simply be removed from the seat part, to further reducing the overall dimensions of the system.

According to an other aspect of the invention, the back support and the seat part of the seat are pivotally connected to each other, such that the back support is pivotal, about a pivot axis, between said first and second position. Therefore, the back support can be folded up towards the seat part of the seat.This results in the overall system dimensions being reduced substantially.

According to a further embodiment of the invention, the seat of the control system has a maximum first height when the back support of the seat is in the first position, wherein the control system has a second maximum height when the back support is in the second position, wherein said second maximum height is less than half said first maximum height.

Thus, a large reduction of the dimensions of the system is achieved, when the back support of the seat is in the second position. Particularly, the height of the system can be reduced by half or even more, preferably also leading to a reduction of transport volume by a factor 2 or more. Therefore, transportation and/or handling costs of each computer simulation control system may also be reduced by about the same amount, of a factor 2 or more.

According to a preferred embodiment of the invention, the back support and the seat part are arranged to at least partially enclose a storage space when the back support is in the second position.

Such a storage space can be used for safely storing various objects and the like, wherein the back support and seat part of the seat can serve to protect such objects from being damaged. In that case, it is advantageous when the storage space is arranged for receiving said control module or at least part thereof, particularly during transportation and/or storage of the control system. Thus, the overall computer simulation control system can be stored and/or transported in a very compact manner, wherein -furthermore-said at least part of said control module is being protected well within said storage space. Such protection is further improved when the seat part and back support are provided with one or more relatively soft upholstering materials..

The present invention also provides a use of a control system according to any of the claims 1-19, wherein said back support is moved from said first position to said second position and/or vice-versa. For instance, said back support is moved to said second position when the control system is to be stored and/or transported safely and with ease. The back support is simply moved to the first position when the control system is to be used for controlling a computer simulator program. Then, the assembled system can provide a relatively real feeling of, for example, the driving seat of a simulated racing car, for the case that the system is used in combination with a racing simulator program.

The present invention further provides a method for handling a computer simulation control system according to any of claims 1-19, wherein said back support is being moved to said second position for transportation and/or storage of the control system. This also provides at least some of the above-mentioned advantages. Preferable, at least part of said control module, for example at least a steering wheel and/or at least one foot pedal, is being arranged between said seat part and said back support. Thus, a relatively compact system can be obtained, wherein said at least part of the control module can be protected by the seat part and the back support. For operation, wherein said back support is being moved from said second position to said first position for supporting at least part of the back of a user.

The present invention also provides a container, for example a box, which is characterized by the features of claim 25.

The container advantageously comprises a computer simulation control system according to any of claims 1-19, wherein the back support of the seat is positioned in said second position, wherein the back support extends substantially opposite the seat part of the seat. Therefore, the container can be relatively compact, requiring little storage and/or transportation space. Also, such container can be handled relatively easy, preferably by a single person, and for example stored in a relatively compact trunk of a private car. Besides, it is advantageous when at least part of said control module is located in a storage space, which storage space is at least partially enclosed by said seat part and said back support of the seat. Therefore, the seat of the control system serves as an inner container for storing said control module or control module part.

Further embodiments of the present invention are described in the accompanying claims.

An embodiment of the invention will now be described, by way of example only, with reference to the accompanying schematic drawings in which corresponding reference symbols indicate corresponding parts.
Fig. 1 is a perspective front view of an embodiment of the invention;
Fig. 2 is a side view of the embodiment shown in fig. 1;
Fig. 3 is a perspective rear view of a frame of the seat of the embodiment shown in fig. 1, wherein the back support is in a first position;
Fig. 4 is a side view of the seat frame in the position of fig. 3;
Fig. 5 is a rear view of the seat frame in the position of fig. 3.
Fig. 6 is a perspective rear view of the frame of the seat of the embodiment shown in fig. 1, wherein the back support is in a second position;
Fig. 7 is a detail B of fig. 6; and
Fig. 8 is a side view of the seat frame in the position of fig. 6.

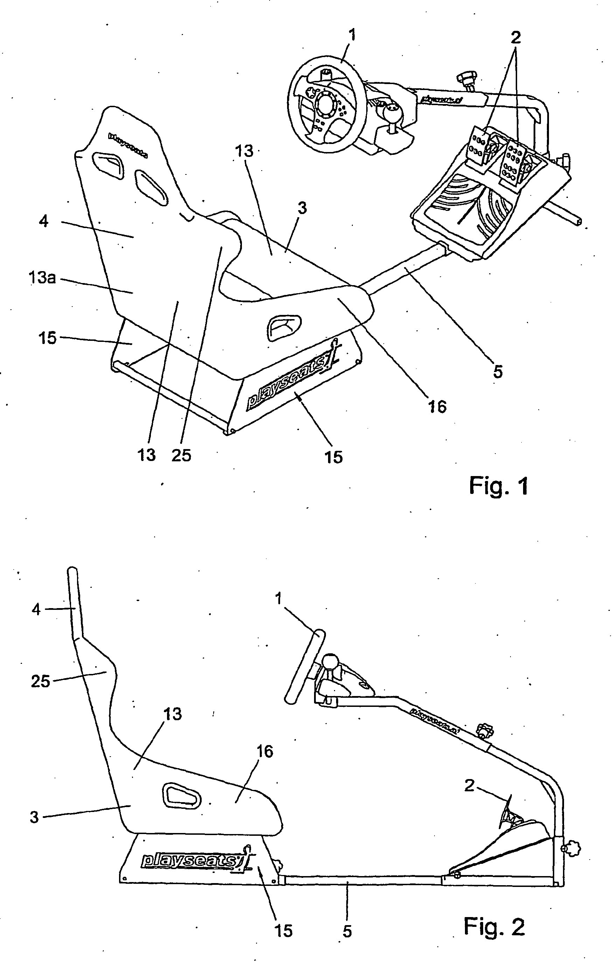

Figures 1 and 2 shows an assembled computer simulation control system, comprising:
   - at least one control module 1, 2 for controlling a computer simulator program;
   - a seat comprising a seat part 3 and a back support 4;
   - at least one mechanism 5 for coupling the seat part 3 and the at least one control module 1, 2 to each other, such that a user can be seated on the seat part 3 for handling the at least one control module 1, 2 there from.

In the present embodiment, said control module for controlling a computer simulator program comprises a steering column with a steering wheel 1 and two foot pedals 2. Said mechanism for coupling the seat and the control module 1, 2 comprises an elongated element 5, for example a rigid bar, extending from a lower part 15 of the seat towards the at least one control module 1, 2. Said lower seat part 15 comprises seat support members 15 which extend below said seat part 3. Said seat part 3 also comprises substantially upwardly extending side parts 16, particularly for forming a bucket seat. Besides, the back support 4 comprises shoulder supports 25.

During use, said control module 1, 2 is connected to computing means or the like for controlling one or more computer programs being run thereon. In particular, the present embodiment of the control system is arranged for controlling a computer racing simulation. Also, during use, one or more displays are provided for displaying a virtual simulator environment. Said computing means and display are not shown in the present figures.

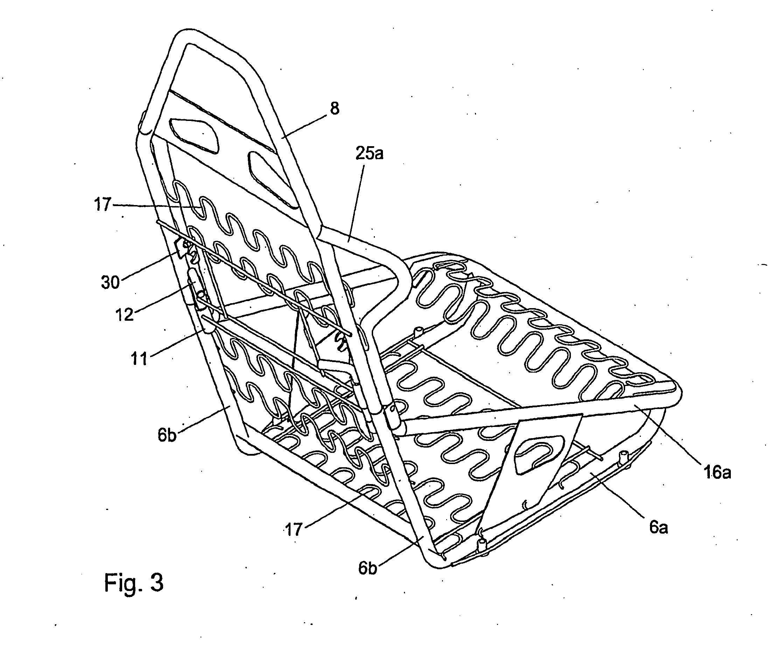

As is shown in figures 3-8, said seat part of the present embodiment comprises a seat frame 6, and said back support comprises a back support frame 8. The frames 6, 8 may be assembled, for instance, from suitable metal tubes or the like. Each of said frames 6, 8 is provided with support springs 17. The back support frame comprises shoulder support frame parts 25a.

From figures 1 and 2 further follows, that the seat is also provided with a suitable upholstering comprising a cover 13, extending over the seat part 3 as well as over the back support 4. Preferably, the seat also comprises a suitable filling, padding, and the like, extending between the covering 13, said frames 6, 8 and said support springs 17 for providing comfort. Said cover 3 is preferably arranged, to cover substantially all outer surfaces of the seat, including or excluding the downwardly facing side of the seat part. Thus, the cover 13 can provide a good protection of the seat parts enclosed thereby, as well as provide a esthetically pleasant and finished look.

As is clearly visible in figures 3-8, the seat frame 6 comprises a substantially horizontal extending bottom frame part 6a, viewed when the control system is the assembled operating position. The seat frame 6 comprises a rear frame part 6b extending substantially at a certain operating angle α upwardly with respect to the bottom frame part 6a. Said angle may comprise various angles, for example an angle α in the range of about 90-135° or an other suitable angle. In a first position of the back support 4, shown in figures 1-5, the back support frame 8 extends substantially in line with the rear frame part 6b of the seat frame 6, so that the back support 4 extends substantially at the same operating angle α upwardly with respect to said seat part 3. In that first position, the back support is available for supporting at least part of the back of a user. Besides, the seat frame 6 comprises side support frame parts 16a for providing rigid bucket seat side parts 16.

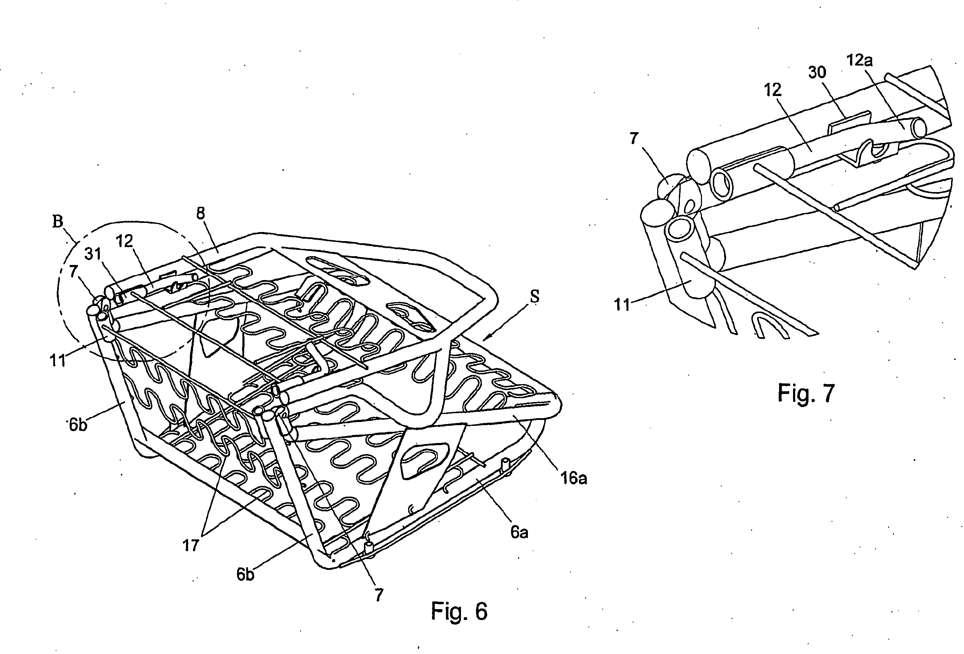

In the present embodiment, the seat frame 6 and back support frame 8 comprise frame connectors 7 for movably connecting these frames 6, 8 to each other. In particular, the back support 4 of the seat is at least movable between said first position and a second position. This second position of the back support 4 is shown in figures 7-8. In this second position, the back support 4 does not extend at said operating angle α upwardly from the seat part 3, but substantially opposite the seat part 3. In the figures 7-8, the back support 4 is laying substantially horizontally in said second position. When the back support 4 is in the second position, the control system is relatively compact, which is advantageous for transportation and/or storage thereof.

In the present embodiment, the back support 4 and the seat part 3 of the seat are pivotally connected to each other, such that the back support 4 is pivotal about a pivot axis 10 between said first and second position. To this aim, the frame connectors comprise suitable hinges 7 which connect the back support frame 8 to the rear frame part 6b of the seat part.

Alternatively, the back support 4 and the seat part 3 of the seat may be, for example, detachably connected to each other when the back support 4 is in the first position, for moving the back support 4 to a suitable second position. Such a detachable connection can be provided in various ways. For instance, opposite ends of the frames 6, 8 of the back support 4 and the seat part 3 of the seat may be arranged to be clamped, slid and/or clicked detachably onto each other. For example, the rear frame of the seat part may comprise upwardly extending tubes or bushes which receive downwardly extending pins of the back support frame 4 for providing such detachable connection.

Besides, the present embodiment comprises locking mechanisms 11, 12 for locking the back support 4 of the seat to the seat part 3 when the back support 4 is in said first position. As is visible in figures 3-8, each locking mechanism comprises a bush 11 and a bolt 12. Said bush 11 and the respective bolt 12 are arranged to cooperate with each other for locking the back support 4 in its first position. In the present embodiment, each bush 11 is attached to said seat frame 6.Each bolt 12 is movably connected to said back support frame 8 by a guiding bush 31 which is connected to that frame 8.

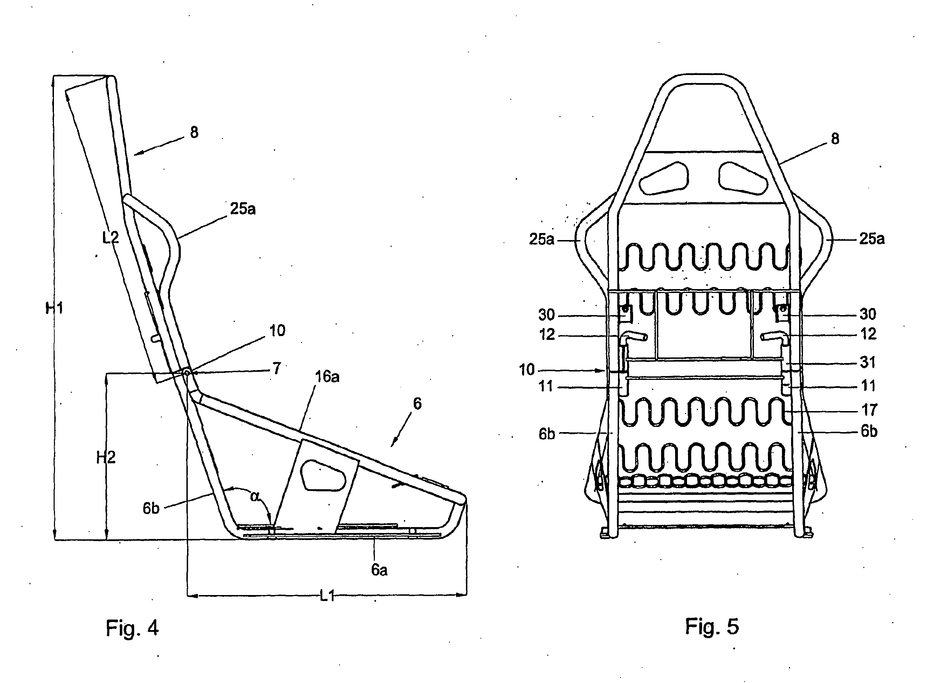

In figure 5, the bolts 12 have been moved downwardly into the bushes 11 for locking the back support. When the bolts 12 are moved out of the bushes 11, as has been shown in figures 3, 6-8, the locking is undone and the back support 4 can be moved to its second position. Clearly visible in figures 3 and 7, retainers 30 are provided on the back frame 8 for retaining the bolts 12 in these withdrawn positions. In the present embodiment, each bolt 12 comprises an extending gripping member 12a for alleviating the manual handling thereof, and for retaining the bolt in said upper, withdrawn, position in cooperation with a retainer 30. To the skilled person, it is clear that the locking mechanism may be arranged in various ways, comprising for example one or more controllable locking parts, pins, spring means and the like.

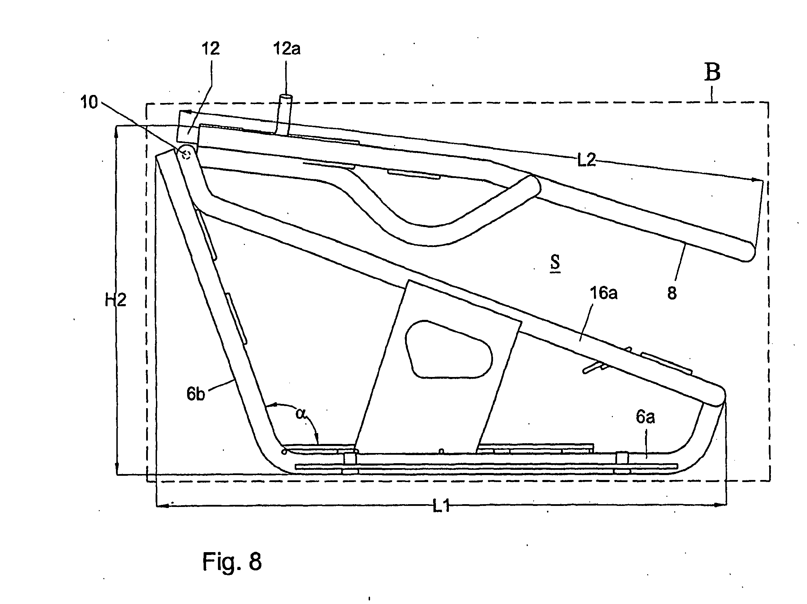

As follows from figures 6 and 8, the back support 4 and the seat part 3 are advantageously arranged to at least partially enclose a storage space S when the back support 4 is in the second position. The storage space S is preferably arranged and suitable for receiving said control module 1, 2 or at least part thereof when the control system has been disassembled, particularly during transportation and/or storage of the control system. In that case, a very compact configuration can be achieved, particularly for transport and/or storage.

Preferably, the cover part 13a extending over the rear side of the seat is at least partially detachably connected to said seat part 3. For example, the cover 13 may comprise one or more sections, extending at the rear side of the seat, which are detachably connected to the seat part. Such detachable connection can be provided by various means, for example Velcro^{tm} material, push buttons, elastic material, wire material, strings and/or other suitable means. When the back support is to be moved to the second position, said cover part 13a is simply detached at least partially from the seat part of the seat, to avoid the cover obstructing said movement.

As has been shown in figure 4, the seat of the control system has a maximum first height H1 when the back support 4 of the seat is in the first position. As shown in fig. 8, the second position of the back support 4 is such, that the seat of the control system has a second maximum height H2 when the back support 4 is in that second position. Advantageously, according to the invention, the second maximum height H2 is less than half said first maximum height H1, as follows from figures 4 and 8.

Also, preferably, -when seen in the side view of the seat as in fig. 4 or fig. 8- the length L2 of the back support 4 of the seat is about the same as the length L1 of the seat part 3 of the seat. For instance, the length L2 of the back support 4 of the seat is may be only about 0 to 10 % larger or smaller than length L1 of the seat 3. Other length ratios -although less preferably- may also be used. The first auxiliary request control system can be made relatively compact by bringing the back support to its second position, as shown in figures 6-8.

Besides, preferably, the seat serves as a inner container for containing and protecting sensitive parts of the control system, for instance said control module 1, 2. Also, a computer for running simulator software may be stored in said storage space S, provided that the computer has suitable dimensions with respect to the volume of that space S. As has been indicated in figure 8 by dashed lines, a relatively small box B may then be used for storing the closely packed control system, providing advantages in view of transport and storage safety, simplicity and cost. The inner dimensions of such box B are preferably about the same as, or only slightly larger, for instance about 10% or 20%, larger than the maximum outer dimensions of the seat with the back support 4 in the second position, measured in Cartesian x-, y- and z-directions. Other ratios of said dimensions -although less preferably- may also be used. Such box B may also be arranged to contain other objects in combination with the folded-in seat, for example said coupling mechanism 3, said seat support members 15 and the like.

While specific embodiments of the invention have been described above, it will be appreciated that the invention may be practiced otherwise than as described. The description is not intended to limit the invention.

For instance, the computer simulation control system can be suitable for use in combination with a driving simulator program, a racing simulator program, a flying simulator program or the like. The system may comprise one or more control modules, wherein each module may be provided with one or more controls, for instance a wheel, pedal, force-feedback controls and/or the like.

Said mechanism for coupling the seat and the at least one control module to each other may be arranged in various ways. For instance, such mechanism may be attached to or be detachably connected to the seat. Also, such mechanism may be attached to or be detachably connected to said control module. For instance, the mechanism may be adjustable to adjust the position of the seat and said control module with respect to each other, particularly for providing a comfortable control environment to a user.

## Claims

1. Computer simulation control system, comprising:
- at least one control module (1, 2) for controlling a computer simulator program;
- a seat comprising a seat part (3) and a back support (4);
- at least one mechanism (5) for coupling the seat and the at least one control module (1, 2) to each other in such a way, that a user can be seated on the seat part (3) of the seat for handling the at least one control module (1, 2) there-from;
wherein the back support (4) of the seat is movable between a first position, in which first position the back support (4) extends at an operating angle (α) upwardly from said seat part (3) for supporting at least part of the back of a user, and a second position, in which second position the back support (4) does not extend at said operating angle (α) upwardly from the seat part (3), wherein said back support (4) extends substantially opposite the seat part (3) when the back support (4) is in the second position, wherein said seat part comprises a seat frame (6), wherein said back support comprises a back support frame (8), wherein the seat frame (6) and back support frame (8) comprise frame connectors (7) for movably connecting these frames (6, 8) to each other, wherein the seat frame (6) comprises a bottom frame part (6a) and a rear frame part (6b), the rear frame part (6b) extending at said operating angle (α) upwardly from the bottom frame part (6a), wherein the back support frame (8) is movably connected to said rear frame (6b) part of the seat frame (6).

2. Control system according to claim 1, wherein the second position is a substantially horizontal position.

3. Control system according claim 1 or 2, wherein the back support (4) and the seat part (3) are arranged to at least partially enclose a storage space (S) when the back support (4) is in the second position.

4. Control system according to claim 3, wherein the storage space (S) is arranged for receiving said at least part of said control module (1, 2), particularly during transportation and/or storage of the control system.

5. Control system according to any of the preceding claims, wherein said seat part (3) comprises substantially upwardly extending side parts, particularly for forming a bucket seat.

6. Control system according to any of the preceding claims, wherein the seat frame (6) and back support frame (8) are assembled from metal tubes.

7. Control system according to any of the preceding claims, wherein the seat frame (6) comprises a substantially horizontal extending bottom frame part (6a).

8. Control system according to any of the preceding claims, wherein the back support (4) and the seat part (3) of the seat are pivotally connected to each other, such that the back support (4) is pivotal, about a pivot axis (10), between said first and second position.

9. Control system according to any of the preceding claims, comprising seat support members (15) extending below said seat part (3).

10. Control system according to any of the preceding claims, comprising at least one locking mechanism (11, 12) for locking the back support (4) of the seat to the seat part (3) when the back support (4) is in said first position.

11. Control system according to claim 10, wherein said locking mechanism comprises at least one bush (11) and at least one bolt (12), wherein said at least one bush (11) and said at least one bolt (12) are arranged to cooperate with each other for locking the back support (4) in its first position.

12. Control system according to claim 11, wherein each bush (11) is attached to said seat frame (6), wherein each bolt (12) is movably connected to said back support frame (8).

13. Control system according to any of the preceding claims, wherein at least said back support (4) comprises a cover (13), wherein the cover (13) of the back support is at least partially detachably connected to said seat part (3), wherein said cover (3) preferably also extends over said seat part (3) after assembly of the system.

14. Control system according to any of the preceding claims, wherein said control module for controlling a computer simulator program comprises a steering wheel (1)

15. Control system according to any of the preceding claims, wherein said control module for controlling a computer simulator program comprises at least one foot pedal (2).

16. Control system according to any of the preceding claims, wherein the at least one mechanism for coupling the seat part (3) and the at least one control module (1, 2) to each other comprises at least one elongated element (3), for example a rigid bar, extending from the seat towards the at least one control module (1, 2).

17. Control system according to any of the preceding claims, wherein the seat of the control system has a maximum first height (H1) when the back support (4) of the seat is in the first position, wherein the control system has a second maximum height (H2) when the back support (4) is in the second position, wherein said second maximum height (H2) is less than half said first maximum height (H1).

18. Control system according to any of the preceding claims, wherein - when seen in side view of the seat- the length (L2) of the back support (4) of the seat is about the same as the length (L1) of the seat part (3) of the seat.

19. Control system according to any of the preceding claims, wherein the seat of the control system serves as an inner container for containing and protecting sensitive parts of the control system.

20. Use of a control system according to any of the claims 1-19, wherein said back support (4) is moved from said first position to said second position and/or vice-versa.

21. Use of a control system according to any of the claims 1-19 for controlling a computer simulator program.

22. Method for handling a computer simulation control system according to any of claims 1-19, wherein said back support is being moved to said second position for transportation and/or storage of the control system.

23. Method according to claim 22, wherein at least part of said control module, for example at least a steering wheel and/or at least one foot pedal, is being arranged between said seat part (3) and said back support (4).

24. Method according to claim 22 or 23, wherein said back support (4) is being moved from said second position to said first position for supporting at least part of the back of a user.

25. Container, for example a box, in combination with a computer simulation control system according to any of claims 1-19, wherein the back support of the seat is positioned in said second position, wherein the back support extends substantially opposite the seat part (3) of the seat.

26. Container according to claim 25, wherein at least part of said control module (1, 2) is located in a storage space (S), which storage space (S) is at least partially enclosed by said seat part and said back support (4) of the seat.

27. Container according to claim 25 or 26, wherein the inner dimensions of the container (B) are about the same as, or only slightly larger, for instance about 10% or 20% larger, than the maximum outer dimensions of the seat with the back support (4) in the second position, measured in Cartesian x-, y- and z-directions.

## Patentansprüche

1. Computersimulationssteuersystem umfassend
- wenigstens ein Steuermodul (1, 2) zur Steuerung eines Computersimulationsprogramms,
- einen Sitz, der einen Sitzabschnitt (3) und eine Rückenlehne (4) umfasst,
- wenigstens einen Mechanismus (5) zum Verbinden des Sitzes mit dem wenigstens einen Steuermodul (1, 2) derart, dass ein Benutzer auf den Sitzabschnitt (3) des Sitzes, zur Handhabung des wenigstens einen Steuermoduls (1, 2) von diesem, gesetzt werden kann,
wobei die Rückenlehne (4) des Sitzes zwischen einer ersten Position, in der sie sich mit einem Arbeitswinkel (α) von dem Sitzabschnitt (3) nach oben erstreckt, um wenigstens einen Teil des Rückens eines Benutzers abzustützen, und einer zweiten Position, in der sie sich nicht unter dem Arbeitswinkel (α) von dem Sitzabschnitt (3) nach oben erstreckt, beweglich ist, wobei die Rückenlehne (4) sich im Wesentlichen zum Sitzabschnitt (3) gegenüberliegend erstreckt, wenn die Rückenlehne (4) sich in der zweiten Position befindet, wobei der Sitzabschnitt einen Sitzrahmen (6), die Rückenlehne, einen Rückenabstützrahmen (8) umfasst, wobei der Sitzrahmen (6) und der Rückenabstützrahmen (8) Rahmenverbinder (7) zum beweglichen Verbinden dieser Rahmen (6, 8) miteinander umfassen, wobei der Sitzrahmen (6) einen unteren Rahmenabschnitt (6a) und einen rückwärtigen Rahmenabschnitt (6b) umfasst, wobei der rückwärtige Rahmenabschnitt (6b) sich unter dem Arbeitswinkel (α) von dem unteren Rahmenabschnitt (6a) aufwärts erstreckt, wobei der Rückenabstützrahmen (8) mit dem rückwärtigen Rahmenabschnitt (6b) des Sitzrahmens (6) beweglich verbunden ist.

2. Steuersystem gemäß Anspruch 1, wobei die zweite Position eine im Wesentlichen horizontale Position ist.

3. Steuersystem gemäß Anspruch 1 oder 2, wobei die Rückenlehne (4) und der Sitzabschnitt (3) derart ausgebildet sind, dass sie wenigstens teilweise einen Aufbewahrungsraum (S) umschließen, wenn die Rückenlehne (4) sich in der zweiten Position befindet.

4. Steuersystem gemäß Anspruch 3, wobei der Aufbewahrungsraum (S) zur Aufnahme wenigstens eines Teils des Steuermoduls (1, 2), insbesondere während des Transports und/oder der Lagerung des Steuersystems, ausgebildet ist.

5. Steuersystem gemäß einem der vorangehenden Ansprüche, wobei der Sitzabschnitt (3) sich im Wesentlichen aufwärts erstreckende Seitenabschnitte, insbesondere zur Bildung eines Schalensitzes, umfasst.

6. Steuersystem gemäß einem der vorangehenden Ansprüche, wobei der Sitzrahmen (6) und der Rückenabstützrahmen (8) aus Metallrohren zusammengebaut sind.

7. Steuersystem gemäß einem der vorangehenden Ansprüche, wobei der Sitzrahmen (6) einen sich im Wesentlichen horizontal erstreckenden unteren Rahmenabschnitt (6a) umfasst.

8. Steuersystem gemäß einem der vorangehenden Ansprüche, wobei die Rückenlehne (4) und der Sitzabschnitt (3) des Sitzes derart schwenkbar miteinander verbunden sind, dass die Rückenlehne (4) um eine Schwenkachse (10) zwischen einer ersten und einer zweiten Position verschwenkbar ist.

9. Steuersystem gemäß einem der vorangehenden Ansprüche, das sich unter dem Sitzabschnitt (3) erstreckende Sitzabstützelemente (15) umfasst.

10. Steuersystem gemäß einem der vorangehenden Ansprüche umfassend wenigstens einen Verriegelungsmechanismus (11, 12) zum Verriegeln der Rückenlehne (4) des Sitzes mit dem Sitzabschnitt (3), wenn sich die Rückenlehne (4) in der ersten Position befindet.

11. Steuersystem gemäß Anspruch 10, wobei der Verriegelungsmechanismus wenigstens eine Hülse (11) und wenigstens einen Bolzen (12) umfasst, wobei die wenigstens eine Hülse (11) und der wenigstens eine Bolzen (12) zum Verriegeln der Rückenlehne (4) in ihrer ersten Position zusammenwirken.

12. Steuersystem gemäß Anspruch 11, wobei jede Hülse (11) an dem Sitzrahmen (6) befestigt ist, wobei jeder Bolzen (12) mit dem Rückenabstützrahmen (8) beweglich verbunden ist.

13. Steuersystem gemäß einem der vorangehenden Ansprüche, wobei wenigstens die Rückenlehne (4) einen Bezug (13) umfasst, wobei der Bezug (13) der Rückenlehne mit dem Sitzabschnitt (3) mindestens teilweise lösbar verbunden ist, wobei der Bezug (3) sich nach der Montage des Systems vorzugsweise auch über den Sitzabschnitt (3) erstreckt.

14. Steuersystem gemäß einem der vorangehenden Ansprüche, wobei das Steuermodul zur Steuerung eines Computersimulationsprogramms ein Lenkrad (1) umfasst.

15. Steuersystem gemäß einem der vorangehenden Ansprüche, wobei das Steuermodul zur Steuerung eines Computersimulationsprogramms wenigstens ein Fußpedal (2) umfasst.

16. Steuersystem gemäß einem der vorangehenden Ansprüche, wobei der wenigstens eine Mechanismus zum Verbinden des Sitzabschnitts (3) mit dem wenigstens einen Steuermodul (1, 2) mindestens ein längliches Element (3), beispielsweise eine starre Stange, die sich von dem Sitz zu dem wenigstens einen Steuermodul (1, 2) erstreckt, umfasst.

17. Steuersystem gemäß einem der vorangehenden Ansprüche, wobei der Sitz des Steuersystems eine maximale erste Höhe (H1) aufweist, wenn die Rückenlehne (4) des Sitzes sich in der ersten Position befindet, wobei das Steuersystem eine maximale zweite Höhe (H2) aufweist, wenn die Rückenlehne (4) sich in der zweiten Position befindet, wobei die maximale zweite Höhe (H2) weniger als die Hälfte der maximalen ersten Höhe (H1) beträgt.

18. Steuersystem gemäß einem der vorangehenden Ansprüche, wobei - bei Betrachtung des Sitzes in der Seitenansicht - die Länge (L2) der Rückenlehne (4) des Sitzes ungefähr genau so groß ist wie die Länge (L1) des Sitzabschnitts (3) des Sitzes.

19. Steuersystem gemäß einem der vorangehenden Ansprüche, wobei der Sitz des Steuersystems als ein inwendiges Behältnis zur Aufnahme und zum Schutz von sensiblen Teilen des Steuersystems dient.

20. Verwendung eines Steuersystems gemäß einem der Ansprüche 1 bis 19, wobei die Rückenlehne (4) aus der ersten Position in die zweite Position und/oder umgekehrt bewegt wird.

21. Verwendung eines Steuersystems gemäß einem der Ansprüche 1 bis 19 zur Steuerung eines Computersimulationsprogramms.

22. Verfahren zur Handhabung eines Computersimulationssteuersystems gemäß einem der Ansprüche 1 bis 19, wobei die Rückenlehne zum Transport und/oder zur Lagerung des Steuersystems in die zweite Position bewegt wird.

23. Verfahren gemäß Anspruch 22, wobei wenigstens ein Teil des Steuermoduls, beispielsweise wenigstens ein Lenkrad und/oder wenigstens ein Fußpedal, zwischen dem Sitzabschnitt (3) und der Rückenlehne (4) angeordnet wird.

24. Verfahren gemäß Anspruch 22 oder 23, wobei die Rückenlehne (4) zum Abstützen wenigstens eines Teils des Rückens des Benutzers von der zweiten Position in die erste Position bewegt wird.

25. Behältnis, beispielsweise ein Gehäuse, in Verbindung mit einem Computersimulationssteuersystems gemäß einem der Ansprüche 1 bis 19, wobei die Rückenlehne des Sitzes in der zweiten Position angeordnet ist, wobei sich die Rückenlehne im Wesentlichen gegenüberliegend zum Sitzabschnitt (3) des Sitzes erstreckt.

26. Behältnis gemäß Anspruch 25, wobei wenigstens ein Teil des Steuermoduls (1, 2) in einem Aufbewahrungsraum (S) angeordnet ist, der wenigstens teilweise durch den Sitzabschnitt und die Rückenlehne (4) des Sitzes umschlossen ist.

27. Behältnis gemäß Anspruch 25 oder 26, wobei die Innenabmessungen des Behältnisses (B) ungefähr gleich groß oder nur geringfügig größer, beispielsweise um 10% oder 20% größer sind, als die maximalen Außenabmessungen des Sitzes, gemessen in kartesischen x-, y- und z-Koordinatenrichtungen, wenn sich die Rückenlehne (4) in der zweiten Position befindet.

## Revendications

1. Système de commande de simulation informatique, comprenant :
- au moins un module de commande (1, 2) pour commander un programme de simulateur informatique ;
- un fauteuil comprenant une partie siège (3) et un dossier (4) ;
- au moins un mécanisme (5) pour coupler le fauteuil et ledit au moins un module de commande (1, 2) l'un à l'autre de manière telle qu'un utilisateur peut être assis sur la partie siège (3) du fauteuil et manipuler ledit au moins un module de commande (1, 2) depuis celle-ci ;
dans lequel le dossier (4) du fauteuil est mobile entre une première position, dans laquelle le dossier (4) s'étend selon un angle opérationnel (α vers le haut depuis ladite partie siège (3) pour supporter au moins une partie du dos d'un utilisateur, et une seconde position, dans laquelle le dossier (4) ne s'étend pas selon ledit angle opérationnel (α) vers le haut depuis ladite partie siège (3), ledit dossier (4) s'étendant sensiblement à l'opposé de la partie siège (3) lorsque le dossier (4) est dans la seconde position, dans lequel ladite partie siège comprend une armature de siège (6), ledit dossier comprend une armature de dossier (8), dans lequel l'armature de siège (6) et l'armature de dossier (8) comprennent des assemblages d'armatures (7) pour assembler de façon mobile ces armatures (6, 8) entre elles, dans lequel l'armature de siège (6) comprend une partie d'armature inférieure (6a) et une partie d'armature arrière (6b), la partie d'armature arrière (6b) s'étendant selon ledit angle opérationnel (α) vers le haut depuis la partie d'armature inférieure (6a), l'armature de dossier (8) étant assemblée de façon mobile à ladite partie armature arrière (6b) de l'armature de siège (6).

2. Système de commande selon la revendication 1, dans lequel la seconde position est une position substantiellement horizontale.

3. Système de commande selon la revendication 1 ou 2, dans lequel le dossier (4) et la partie siège (3) sont agencés de façon à renfermer au moins partiellement un espace de stockage (S) lorsque le dossier (4) est dans la seconde position.

4. Système de commande selon la revendication 3, dans lequel l'espace de stockage (S) est prévu pour recevoir ladite au moins une partie dudit module de commande (1, 2), en particulier pendant le transport et/ou le stockage du système de commande.

5. Système de commande selon l'une quelconque des revendications précédentes, dans lequel ladite partie siège (3) comprend des parties latérales s'étendant substantiellement vers le haut, en particulier pour former un siège baquet.

6. Système de commande selon l'une quelconque des revendications précédentes, dans lequel l'armature de siège (6) et l'armature de dossier (8) sont composées de tubes métalliques.

7. Système de commande selon l'une quelconque des revendications précédentes, dans lequel l'armature de siège (6) comprend une partie d'armature inférieure s'étendant substantiellement à l'horizontale (6a).

8. Système de commande selon l'une quelconque des revendications précédentes, dans lequel le dossier (4) et la partie siège (3) du fauteuil sont assemblés à pivotement l'un à l'autre, de telle manière que le dossier (4) peut pivoter autour d'un axe de pivot (10), entre lesdites première et seconde positions.

9. Système de commande selon l'une quelconque des revendications précédentes, comprenant des éléments de support du fauteuil (15) s'étendant sous ladite partie siège (3).

10. Système de commande selon l'une quelconque des revendications précédentes, comprenant au moins un mécanisme de verrouillage (11, 12) pour bloquer le dossier (4) du fauteuil par rapport à la partie siège (3) lorsque le dossier (4) est dans ladite première position.

11. Système de commande selon la revendication 10, dans lequel ledit mécanisme de verrouillage comprend au moins une douille (11) et au moins un boulon (12), ladite au moins une douille (11) et ledit au moins un boulon (12) étant agencés pour coopérer l'un avec l'autre pour bloquer le dossier (4) dans sa première position.

12. Système de commande selon la revendication 11, dans lequel chaque douille (11) est fixée à ladite armature de siège (6), chaque boulon (12) étant assemblé de façon mobile à ladite armature de dossier (8).

13. Système de commande selon l'une quelconque des revendications précédentes, dans lequel au moins ledit dossier (4) comprend une couverture (13), dans lequel la couverture (13) du dossier est au moins partiellement assemblée de manière détachable à ladite partie siège (3), dans lequel ladite couverture (3) de préférence s'étend aussi sur ladite partie siège (3) après montage du système.

14. Système de commande selon l'une quelconque des revendications précédentes, dans lequel ledit module de commande pour commander un programme de simulateur informatique comprend un volant (1).

15. Système de commande selon l'une quelconque des revendications précédentes, dans lequel ledit module de commande pour commander un programme de simulateur informatique comprend au moins une pédale (2).

16. Système de commande selon l'une quelconque des revendications précédentes, dans lequel ledit au moins un mécanisme pour coupler la partie siège (3) et ledit au moins un module de commande (1, 2) l'un à l'autre comprend au moins un élément allongé (3), par exemple une barre rigide, s'étendant depuis le fauteuil vers ledit au moins un module de commande (1, 2).

17. Système de commande selon l'une quelconque des revendications précédentes, dans lequel le fauteuil du système de commande a une première hauteur maximale (H1) lorsque le dossier (4) du fauteuil est dans la première position, dans lequel le système de commande a une deuxième hauteur maximale (H2) lorsque le dossier (4) est dans la seconde position, ladite deuxième hauteur maximale (H2) étant inférieure à la moitié de ladite première hauteur maximale (H1).

18. Système de commande selon l'une quelconque des revendications précédentes, dans lequel, en vue latérale du fauteuil, la longueur (L2) du dossier (4) du fauteuil est à peu près la même que la longueur (L1) de la partie siège (3) du fauteuil.

19. Système de commande selon l'une quelconque des revendications précédentes, dans lequel le fauteuil du système de commande sert de conteneur intérieur destiné à contenir et à protéger les parties sensibles du système de commande.

20. Utilisation d'un système de commande selon l'une quelconque des revendications 1 à 19, dans lequel on fait passer ledit dossier (4) de ladite première position à ladite seconde position et/ou vice-versa.

21. Utilisation d'un système de commande selon l'une quelconque des revendications 1 à 19 pour commander un programme de simulateur informatique.

22. Procédé d'emploi d'un système de commande de simulation informatique selon l'une quelconque des revendications 1 à 19, dans lequel on met ledit dossier dans ladite seconde position pour le transport et/ou le stockage du système de commande.

23. Procédé selon la revendication 22, dans lequel au moins une partie dudit module de commande, par exemple au moins un volant et/ou au moins une pédale, est placée entre ladite partie siège (3) et ledit dossier (4).

24. Procédé selon la revendication 22 ou 23, dans lequel on fait passer ledit dossier (4) de ladite seconde position à ladite première position pour supporter au moins une partie du dos d'un utilisateur.

25. Conteneur, par exemple une boîte, en association avec un système de commande de simulation informatique selon l'une quelconque des revendications 1 à 19, dans lequel le dossier du fauteuil est mis dans ladite seconde position, dans lequel le dossier s'étend substantiellement en face de la partie siège (3) du fauteuil.

26. Conteneur selon la revendication 25, dans lequel au moins une partie dudit module de commande (1, 2) est située dans un espace de stockage (S), ledit espace de stockage (S) étant au moins partiellement enfermé par ladite partie siège et ledit dossier (4) du fauteuil.

27. Conteneur selon la revendication 25 ou 26, dans lequel les dimensions intérieures du conteneur (B) sont à peu près les mêmes, ou seulement légèrement plus grandes, par exemple environ 10 % ou 20 % plus grandes, que les dimensions extérieures maximales du fauteuil avec le dossier (4) dans la seconde position, mesurées dans les directions cartésiennes x, y et z.
